(19) Europäisches Patentamt
European Patent Office
Office européen des brevets

(11) Veröffentlichungsnummer: **0 068 255**
**B1**

(12) # EUROPÄISCHE PATENTSCHRIFT

(45) Veröffentlichungstag der Patentschrift: **03.10.84**

(51) Int. Cl.³: **C 08 F 10/00**, C 08 F 4/64

(21) Anmeldenummer: **82105163.8**

(22) Anmeldetag: **14.06.82**

(54) **Verfahren zur Herstellung eines Polyolefins und Katalysator hierfür.**

(30) Priorität: **20.06.81 DE 3124350**

(43) Veröffentlichungstag der Anmeldung: **05.01.83 Patentblatt 83/1**

(45) Bekanntmachung des Hinweises auf die Patenterteilung: **03.10.84 Patentblatt 84/40**

(84) Benannte Vertragsstaaten: **BE DE FR GB IT NL**

(56) Entgegenhaltungen:
**EP - A - 0 002 221**
**DE - A - 2 000 566**

(73) Patentinhaber: **HOECHST AKTIENGESELLSCHAFT, Postfach 80 03 20, D-6230 Frankfurt am Main 80 (DE)**

(72) Erfinder: **Diedrich, Bernd, Dr., Ulmenweg 10, D-6236 Eschborn (DE)**
Erfinder: **Franke, Rainer, Dr., Ginsterweg 18A, D-6272 Niedernhausen/Taunus (DE)**
Erfinder: **Hartlapp, Jürgen, Dr., Leonhardstrasse 5A, D-6234 Hattersheim am Main (DE)**
Erfinder: **Schäfer, Werner, Dr., Rosenstrasse 10, D-6238 Hofheim am Taunus (DE)**
Erfinder: **Strobel, Wolfgang, Dr., Ubierstrasse 39, D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Bekannt sind Verfahren zur Herstellung von Polyolefinen mittels Katalysatoren, die durch Umsetzung von Magnesiumalkoholaten und/oder komplexen Magnesiumalkoholaten mit Übergangsmetallhalogeniden gebildet werden (DE-AS Nrn. 1795197, 1957679, DE-OS Nr. 2000566).

In einem Fall wird für die Umsetzung der Magnesiumverbindung und der chlorhaltigen Titanverbindung ein Temperaturbereich von 0 bis 200°C empfohlen, jedoch soll die obere Temperaturgrenze dabei so gewählt werden, dass keine Zersetzungsprodukte gebildet werden. Als Vorteil wird neben der hohen Aktivität der Polymerisationskatalysatoren besonders auf die Möglichkeit zur Darstellung von Ethylen-Homopolymeristen und Ethylen-α-Olefin-Copolymerisation mit enger Molekulargewichtsverteilung hingewiesen (DE-AS Nrn. 1795197, 1957679).

Im anderen Fall erfolgt die Umsetzung des Metallalkoholats mit der Übergangsmetallverbindung in Gegenwart oder Abwesenheit eines inerten Verdünnungsmittels bei Temperaturen von 40 bis 210°C; die Reaktionsdauer der Umsetzung liegt im allgemeinen zwischen 5 und 240 min (DE-OS Nr. 2000566). Vor einer längeren Reaktionssdauer wird ausdrücklich gewarnt, da sie eine Verschlechterung der Eigenschaften des Katalysators bewirke. Auch in dieser Druckschrift wird als Vorteil der Katalysatoren die hohe Aktivität und die Möglichkeit zur Herstellung von Polyolefinen mit enger Molekulargewichtsverteilung genannt. Gleichzeitig wird ein Katalysator beschrieben, der durch Umsetzung von Magnesiumethylat mit Vanadintetrachlorid erhalten wird und ein Polyethylen mit breite Molekulargewichtsverteilung ergibt. Vanadiumverbindungen haben jedoch den grossen Nachteil, dass sie im Gegensatz zu Titanverbindungen ausserordentlich giftig sind. Die Vanadiumverbindungen enthaltenden Produkte sind daher nur begrenzt einsatzfähig. Bei technischen Polymerisationsverfahren ergeben sich daher bei dem Einsatz von Vanadiumverbindungen ausserdem hohe Kosten bei der Aufarbeitung der Kontaktmutterlaugen.

Es bestand somit die Aufgabe, Polymerisationskatalysatoren auf Basis eines Magnesiumalkoholats zu finden, mittels derer man Polyolefine mit breiter Molekulargewichtsverteilung in hoher Ausbeute herstellen kann.

Es wurde nun gefunden, dass man auch mit den Umsetzungsprodukten von Magnesiumalkoholaten mit Titantetrachlorid Polyolefine mit breiter Molekulargewichtsverteilung und sehr hoher Ausbeute erhalten kann, wenn man die Reaktion zwischen dem Magnesiumalkoholat und dem Titantetrachlorid bei einer relativ niedrigen Temperatur durchführt und anschliessend das Reaktionsgemisch bei einer höheren Temperatur unter Zusatz von $TiCl_4$ zur Abspaltung von Alkylchloriden thermisch behandelt.

Gegenstand der Erfindung ist daher ein Verfahren zur Polymerisation von 1-Olefinen der Formel $R^4CH = CH_2$, in der $R^4$ Wasserstoff oder einen Alkylrest mit bis 10 Kohlenstoffatomen bedeutet, in Gegenwart eines Katalysators, der aus einer magnesium- und titanhaltigen Komponente (Komponente A) und einer metallorganischen Verbindung der Gruppen I bis III des Periodensystems (Komponente B) besteht, dadurch gekennzeichnet, dass man in Gegenwart eines Katalysators polymerisiert, dessen Komponente A in der Weise hergestellt wurde, dass in einer ersten Reaktionsstufe ein Magnesiumalkoholat mit Titantetrachlorid in einem Kohlenwasserstoff bei einer Temperatur von 50 bis 100°C umgesetzt wurde, das gebildete Reaktionsgemisch in einer zweiten Reaktionsstufe bei einer Temperatur von 110 bis 200°C unter Zusatz von $TiCl_4$ 8 bis 100 h einer thermischen Behandlung unterwofen wurde, und danach der Feststoff durch mehrmaliges Waschen mit einem Kohlenwasserstoff von löslichen Reaktionsprodukten befreit wurde.

Gegenstand der Erfindung ist aber auch der für dieses Verfahren verwendete Katalysator und dessen Herstellung.

Zur Herstellung der Komponente A wird ein Magnesiumalkoholat verwendet.

Dieses Magnesiumalkoholat kann ein einfaches Magnesiumalkoholat der Formel $Mg(OR)_2$ sein, in der R gleiche oder verschiedene Alkylreste mit 1 bis 6 Kohlenstoffatomen bedeutet. Beispiele sind $Mg(OC_2H_5)_2$, $Mg(OiC_3H_7)_2$, $Mg(OnC_3H_7)_2$, $Mg(OnC_4H_9)_2$, $Mg(OCH_3)(OC_2H_5)$, $Mg(OC_2H_5)(OnC_3H_7)$. Es kann auch ein einfaches Magnesiumalkoholat der Formel $Mg(OR)_nX_m$ verwendet werden, in der X = Halogen, $(SO_4)_{1/2}$, OH, $(CO_3)_{1/2}$, $(PO_4)_{1/3}$, Cl ist, R die oben genannte Bedeutung hat und $n + m = 2$ ist.

Es kann jedoch auch ein komplexes Magnesiumalkoholat eingesetzt werden.

Als komplexes Magnesiumalkoholat wird ein Magnesiumalkoholat bezeichnet, das neben Magnesium mindestens ein Metall der 1. bis 4. Hauptgruppe des Periodensystems enthält. Beispiele für ein derartiges komplexes Magnesiumalkoholat sind: $[Mg(OiC_3H_7)_4]Li_2$; $[Al_2(OiC_3H_7)_8]Mg$; $[Si(OC_2H_5)_6]Mg$; $[Mg(OC_2H_5)_3]Na$; $[Al_2(OiC_4H_9)_8]Mg$; $[Al_2(O\text{-sek.}C_4H_9)_6(OC_2H_5)_2]Mg$.

Die Herstellung der komplexen Magnesiumalkoholate (Alkoxosalze) erfolgt nach bekannte Methode (Lit. „Meerwein", „Ann." *455* (1927), S. 234, 476 (1929), S. 113; Houben-Weyl, „Methoden der organischen Chemie", Bd. 6/2, S. 30). Für die Herstellung des komplexen Magnesiumalkoholats seien folgende Beispiele genannt:

1. Man lässt zwei Metallalkoholate in einem geeigneten Lösungsmittel aufeinander einwirken, z.B.

$$2Al(OR)_3 + Mg(OR)_2 \rightarrow [Al_2(OR)_8]Mg$$

2. Auflösen von Magnesium in einer alkoholischen Lösung eines Metallalkoholates

$$2LiOR + Mg + 2\,ROH \rightarrow [Mg(OR)_4]Li_2 + H_2$$

3. Gleichzeitiges Auflösen zweier Metalle in Alkohol

$$8\,ROH + Mg + 2Al \rightarrow [Al_2(OR)_8]Mg + 4\,H_2$$

Bevorzugt verwendet werden die einfachen Magnesiumalkoholate, insbesondere $Mg(OC_2H_5)_2$, $Mg(OnC_3H_7)_2$ und $Mg(OiC_3H_7)_2$. Das Magnesiumalkoholat wird in reiner Form oder auf einem Träger fixiert eingesetzt.

Die Herstellung der Komponente A erfolgt in zwei Reaktionsstufen bei unterschiedlicher Temperatur.

In der ersten Reaktionsstufe wird das Magnesiumalkoholat mit Titantetrachlorid bei einer Temperatur von 50 bis 100°C, vorzugsweise 60 bis 90, in Gegenwart eines inerten Kohlenwasserstoffs unter Rühren umgesetzt. Auf 1 mol Magnesiumalkoholat werden 0,9 bis 5 mol Titantetrachlorid eingesetzt, vorzugsweise 1,4 bis 3,5 mol Titantetrachlorid auf 1 mol Magnesiumalkoholat.

Als inerter Kohlenwasserstoff eignet sich ein aliphatischer oder cycloaliphatischer Kohlenwasserstoff wie Butan, Pentan, Hexan, Heptan, Isooctan, Cylclohexan, Methylcyclohexan, sowie ein aromatischer Kohlenwasserstoff wie Toluol, Xylol; auch eine hydrierte Dieselöl- und Benzinfraktion, die sorgfältig von Sauerstoff, Schwefelverbindungen und Feuchtigkeit befreit worden ist, ist brauchbar.

Die Reaktionsdauer der ersten Stufe beträgt 0,5 bis 8, vorzugsweise 2 bis 6 h.

In der ersten Reaktionsstufe findet ein weitgehender Austausch der Alkoxygruppen des Magnesiumalkoholats mit den Chorgruppen des Titantetrachlorids statt. Als Reaktionsprodukt erhält man dabei einen kohlenwasserstoffunlöslichen magnesium- und titanhaltigen Feststoff und kohlenwasserstofflösliche, Chlor und Alkoxygruppen enthaltende Titanverbindungen.

Anschliessend wird das in dem Kohlenwasserstoff unlösliche Reaktionsprodukt des Magnesiumalkoholats mit den Titantetrachlorid durch mehrmaliges Waschen mit einem inerten Kohlenwasserstoff von nicht umgesetzten, löslichen Titanverbindungen befreit.

Der erhaltene Feststoff wird wieder in einem Kohlenwasserstoff suspendiert und in einer zweiten Reaktionsstufe bei einer Temperatur von 110 bis 200, vorzugsweise 110 bis 160°C, unter Zusatz von Titantetrachlorid einer thermischen Behandlung unterworfen.

Pro Molteil in der 1. Reaktionsstufe eingesetztes Magnesiumalkoholat werden in der 2. Reaktionsstufe 0,1 bis 3 Molteile, vorzugsweise 0,1 bis 2 Molteile $TiCl_4$, eingesetzt.

Anschliessend trennt man durch mehrmaliges Waschen mit einem Kohlenwasserstoff alle löslichen Reaktionsprodukte ab und erhält einen im Kohlenwasserstoff unlöslichen, magnesium- und titanhaltigen Feststoff, der als Komponente A bezeichnet wird.

Die Herstellung des erfindungsgemäss zu verwendenden Polymerisationskatalysators erfolgt durch Zusammenbringen der Komponente A und einer metallorganischen Verbindung der Gruppen I bis III des Periodensystems (Komponente B).

Vorzugsweise verwendet man als Komponente B aluminiumorganische Verbindungen. Als aluminiumorganische Verbindungen eignen sich chlorhaltige aluminiumorganische Verbindungen, die Dialkylaluminiummonochloride der Formel $R^2_2AlCl$ oder Alkylaluminiumsesquichloride der Formel $R^2_3Al_2Cl_3$, worin $R^2$ gleiche oder verschiedene Alkylreste mit 1 bis 16 Kohlen stoffatomen sein kann. Als Beispiele seien genannt

$(C_2H_5)_2AlCl$,
$(iC_4H_9)_2AlCl$,
$(C_2H_5)_3Al_2Cl_3$.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Andererseits eignen sich als solche chlorfreie aluminiumorganische Verbindungen Aluminiumtrialkyle $AlR^3_3$ oder Aluminiumdialkylhydride der Formel $AlR^3_2H$, in denen $R_3$ gleiche oder verschiedene Alkylreste mit 1 bis 16 Kohlenstoffatomen bedeutet. Beispiele sind

$Al(C_2H_5)_3$, $Al(C_2H_5)_2H$, $Al(C_3H_7)_3$,
$Al(C_3H_7)_2H$, $Al(iC_4H_9)_3$, $Al(iC_4H_9)_2H$,
$Al(C_8H_{17})_3$, $Al(C_{12}H_{25})_3$,
$Al(C_2H_5)(C_{12}H_{25})_2$,
$Al(iC_4H_9)(C_{12}H_{25})_2$.

Es können auch Mischungen von metallorganischen Verbindungen der I. bis III. Gruppe des Periodensystems, insbesondere Mischungen verschiedener aluminiumorganischer Verbindungen eingesetzt werden.

Beispielsweise seien folgende Mischungen genannt:

$Al(C_2H_5)_3$ und $Al(iC_4H_9)_3$, $Al(C_2H_5)_2Cl$ und $Al(C_8H_{17})_3$,
$Al(C_2H_5)_3$ und $Al(C_8H_{17})_3$, $Al(C_4H_9)_2H$ und $Al(C_8H_{17})_3$,
$Al(iC_4H_9)_3$ und $Al(C_8H_{17})_3$, $Al(C_2H_5)_3$ und $Al(C_{12}H_{25})_3$,
$Al(iC_4H_9)_3$ und $Al(C_{12}H_{25})_3$, $Al(C_2H_5)_3$ und $Al(C_{16}H_{33})_3$,
$Al(C_3H_7)_3$ und $Al(C_{18}H_{37})_2(iC_4H_9)$, $Al(C_2H_5)_3$ und
Aluminiumisoprenyl (Umsetzungsprodukt von Isopren mit $Al(iC_4H_9)_3$ oder $Al(IC_4H_9)_2H$).

Das Mischen der Komponente A und der Komponente B kann vor der Polymerisation in einem Rührkessel bei einer Temperatur von −30 bis 150, vorzugsweise − 10 bis 120°C erfolgen. Es ist auch möglich, die beiden Komponenten direkt im Polymerisationskessel bei einer Polymerisationstemperatur von 20 bis 200°C zu vereinigen. Die Zugabe der Komponente B kann jedoch auch in zwei Schritten erfolgen, indem vor der Polymerisationsreaktion die Komponente A mit einem Teil der Komponente B bei einer Temperatur von −30 bis 150°C voraktiviert wird und die weitere Zugabe der Komponente B in dem

Polymerisationsreaktor bei einer Temperatur von 20 bis 200°C erfolgt.

Der erfindungsgemäss zu verwendende Polymerisationskatalysator wird zur Polymerisation von 1-Olefinen der Formel $R^4Ch = CH_2$, in der $R^4$ Wasserstoff oder einen Alkylrest mit 1 bis 10 Kohlenstoffatomen bedeutet, eingesetzt, beispielsweise Ethylen, Propylen, Buten-(1), Hexen-(1), 4-Methylpenten-(1), Octen-(1). Vorzugsweise wird Ethylen allein oder als Gemisch von mindestens 70 Gew.-% Ethylen und maximal 30 Gew.-% eines anderen 1-Olefins der obigen Formel polymerisiert. Insbesondere wird Ethylen allein oder ein Gemisch von mindestens 90 Gew.-% Ethylen und maximal 10 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200, vorzugsweise 50 bis 150°C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente A in einer Konzentration, bezogen auf Titan, von 0,0001 bis 1, vorzugsweise 0,001 bis 0,5 mmol Ti/l Dispergiermittel bzw. pro Liter Reaktorvolumen angewendet. Die metallorganische Verbindung wird in einer Konzentration von 0,1 bis 5, vorzugsweise 0,5 bis 4 mmol/l Dispergiermittel bzw. pro Liter Reaktorvolumen verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Das Molekulargewicht des Polymerisats wird in bekannter Weise geregelt; vorzugsweise wird dazu Wasserstoff verwendet.

Das erfindungsgemässe Verfahren ergibt infolge der hohen Aktivität des zu verwendenden Katalysators Polymerisate mit sehr geringem Titan- und Halogengehalt und daher äusserst guten Werten im Farbbeständigkeits- und Korrosionstest. Ferner ermöglicht es die Herstellung von Polymerisaten mit sehr breiter Molekulargewichtsverteilung; die Mw/Mn-Werte der Polymerisate liegen über 10.

Ein weiterer entscheidender Vorteil des erfindungsgemässen Verfahrens ist darin zu sehen, dass es die Herstellung von Polymerisaten mit extrem unterschiedlichen Molekulargewichten allein durch unterschiedliche Wasserstoffkonzentrationen ermöglicht. Beispielsweise entstehen bei der Polymerisation ohne Wasserstoff Polymerisate mit Molekulargewichten über 2 Millionen und bei Wasserstoffgehalten von 70 Vol.-% im Gasraum Polymerisate mit Molekulargewichten im Bereich von 30000.

Die Polymerisate lassen sich nach dem Extrusions- und Extrusionsblasverfahren zu Hohlkörpern, Rohren, Kabeln und Folien mit glatten Oberflächen bei hohen Durchsatzleistungen verarbeiten.

Aufgrund eines besonderen strukturellen Aufbaues zeichnen sich die aus den erfindungsgemäss erhaltenen Polyolefinen hergestellten Hohlkörper und Flaschen durch eine hohe Unempfindlichkeit gegen Spannungsrissbildung aus.

Weiterhin ermöglicht das erfindungsgemässe Verfahren bei der Suspensions- und Gasphasenpolymerisation die Herstellung von rieselfähigen Polymerisatpulvern mit hohen Schüttdichten, so dass eine direkte Weiterverarbeitung zu Formkörpern ohne Granulierschritt erfolgen kann.

*Beispiele*

Bei den nachfolgenden Beispielen wird zur Kontaktherstellung und zur Polymerisation eine hydrierte Dieselölfraktion mit einem Siedebereich von 130 bis 170°C verwendet.

Der Titangehalt der Katalysatoren wird kolorimetrisch bestimmt (Lit. G.O. Müller, „Praktikum der quantitativen chemischen Analyse", 4. Aufl. [1957] S. 243).

Der Schmelzindex MFI wird nach DIN 53735 (E) bestimmt.

Die Mw/Mn-Werte werden aus den Fraktionierdaten eines Gelpermeationschromatographen in 1,2,4-Trichlorbenzol als Lösungs- und Elutionsmittel bei 130°C ermittelt.

Die Viskosität VZ wird nach DIN 53728 Blatt 4 mit einem Ubblelohde-Viskosimeter in Dekahydronaphthalin als Lösungsmittel bestimmt.

Die Bestimmung der Dichte erfolgt nach DIN 53479, die der Schüttdichte nach DIN 53468.

*Beispiel 1*

*a) Herstellung der Komponente A*

114,3 g Magnesiumethylat werden in einem 3-l-Vierhalskolben mit Tropftrichter, KPG-Rührer, Rückflusskühler und Thermometer in 1,5 l einer Dieselölfraktion unter $N_2$-Überlagerung dispergiert. Zu dieser Dispersion werden innerhalb von 2 h bei 90°C 332 g Titantetrachlorid getropft. Danach wird bei 100°C mit Dieselöl gewaschen, bis die überstehende Lösung kein Titan mehr enthält. Nun wird bei 130°C innerhalb einer Stunde 57 g Titantetrachlorid zugetropft und unter Überleiten eines schwachen $N_2$-Stromes weitere 40 h gerührt.

Anschliessend wird das Umsetzungsprodukt mit der oben erwähnten Dieselölfraktion gewaschen, bis die überstehende Lösung kein Titan mehr enthält.

Nach dem Trocknen besitzt der Feststoff (Komponente A) folgende analytische Zusammensetzung:

| | |
|---|---|
| Ti | 15,7 Gew.-% |
| Mg | 13,5 Gew.-% |
| Cl | 54,1 Gew.-% |

*b) Voraktivierung der Komponente A*

30,5 g der Komponente A werden mit Dieselöl auf 150 ml aufgefüllt und bei 20°C unter Rühren mit 100 ml einer Aluminiumtriisobutyllösung, die 0,5 mol $Al(iC_4H_9)_3$ pro 1 l enthält, versetzt. Dadurch wird 40 Gew.-% des vierwertigen Titans zu Titan(III) reduziert.

*c) Ethylenpolymerisation in Suspension*

In einem 150 l Kessel werden 100 l Dieselöl, 100 mmol Aluminiumisoprenyl und 5,0 ml der unter b beschriebenen Dispersion gegeben. Anschliessend werden bei einer Polymerisationstemperatur von 85°C 5 kg Ethylen/h und soviel $H_2$ eingeleitet, dass der $H_2$-Gehalt im Gasraum 50 Vol.-% beträgt. Nach 6 h wird die Polymerisation bei einem Druck von 24,8 bar durch Entspannen beendet. Die Suspension wird filtriert und das Polyethylenpulver durch Überleiten von heissem Stickstoff getrocknet.

Es werden 29,4 kg Polyethylen erhalten. Dies entspricht einer Kontaktaktivität von 48,2 kg PE/g Katalysatorfeststoff (Komponente A) oder 14,7 kg PE/mmol Ti. Das Polyethylenpulver besitzt einen MFI 190/5 von 2,0 g/10 min. Die Molekulargewichtsverteilungsbreite Mw/Mn ist 19, der MFI 190/15/MFI 190/5 beträgt 8,8. Die Dichte ist 0,959 g/cm³ und die Schüttdichte des Pulvers ist 0,44 g/cm³.

*Beispiel 2*

*Ethylenpolymerisation in Suspension*

Unter den gleichen Bedingungen wie im Beispiel 1c beschrieben werden in den Kessel 100 mmol Aluminiumtriisobutyl und 1,3 ml der im Beispiel 1b beschriebenen Dispersion gegeben.

Anschliessend werden bei einer Polymerisationstemperatur von 70°C 4 kg Ethylen/h eingeleitet. Nach 6 h wird die Polymerisation bei einem Druck von 22,4 bar durch Entspannenbeendet. Die Suspension wird filtriert und das Polyethylenpulver durch Überleiten von heissem Stickstoff getrocknet. Man erhält 23,2 kg Polyethylen. Das entspricht einer Kontaktaktivität von 146,2 kg PE/g Katalysatorfeststoff oder 44,6 kg PE/mmol Ti. Das Polyethylenpulver hat eine VZ von 2000 ml/g; das entspricht einem Molekulargewicht von 1,6 Millionen. Die Schüttdichte liegt bei 0,45 g/cm³.

*Beispiel 3*

*Ethylenpolymerisation in Suspension*

Unter den gleichen Bedingungen wie im Beispiel 1c beschrieben werden in den Kessel 50 mmol Diethylaluminiumhydrid und 12,5 ml der im Beispiel 1b beschriebenen Dispesion gegeben. Anschliessend werden bei einer Polymerisationstemperatur von 85°C 4 kg Ethylen/h und soviel $H_2$ eingeleitet, dass der $H_2$-Gehalt im Gasraum 70 Vol.-% beträgt. Nach 6 h wird die Polymerisation bei einem Druck von 24,5 bar durch Entspannen beendet. Die Suspension wird filtriert und das Polyethylenpulver durch Überleiten von heissem Stickstoff getrocknet. Es werden 23,0 kg Polyethylen isoliert. Dies entspricht einer Kontaktausbeute von 15,1 kg PE/g Katalysatorfeststoff oder 4,6 kg PE/mmol Ti. Das Polyethylen hat einen MFI 190/5 von 87 g/10 min, eine VZ von 120 ml/g, eine Dichte von 0,964 g/cm³ und eine Schüttdichte von 0,45 g/cm³. Die Molekulargewichtsverteilungsbreite Mw/Mn beträgt 21.

*Beispiel 4*

*Ethylen-Hexen-1-Copolymerisation in Suspension*

In einem 1,5-l-Stahlautoklaven werden 750 ml Hexan, 5 mmol Aluminiumisoprenyl und 3,1 mg der Komponente A (Beispiel 1a) gegeben. Anschliessend werden bei einer Polymerisationstemperatur von 85°C 6 bar $H_2$ und 16 bar Ethylen aufgedrückt. Das Ethylen wird in der Menge nachdosiert, dass ein Gesamtdruck von 22 bar aufrechterhalten wird. Gleichzeitig werden 25 ml Hexen-1/h zudosiert. Nach 8 h wird der Versuch abgebrochen. Das Copolymerisat wird durch Filtration abgetrennt und im Vakuumtrockenschrank getrocknet. Es werden 184 g Copolymerisat erhalten. Dies entspricht einer Kontaktausbeute von 59,4 kg Polymeres/g Katalysatorfeststoff oder 18,1 kg Polymeres/mmol Ti. Das Ethylen-Hexen-1-Copolymerisat besitzt einen Schmelzindex MFI 190/5 von 0,52 g/10 min und eine Dichte von 0,950 g/cm³.

*Beispiel 5*

*Ethylen-Propylen-Copolymerisation in Suspension*

In einem 500-l-Kessel werden 360 l Hexan, 180 mmol Tetraisobutylaluminoxan und 31,3 ml der im Beispiel 1b beschriebenen Dispersion vorgelegt. Danach wird bei einer Polymerisationstemperatur von 85°C 17 kg Ethylen/h, 1 l Propylen/h und soviel $H_2$ eingeleitet, dass sich im Gasraum ein $H_2$-Gehalt von 40 Vol.-% einstellt. Nach 6 h ist der Polymerisationsdruck auf 7,4 bar angestiegen und die Polymerisation wird durch Entspannen abgebrochen. Das Polymerisatpulver wird durch Filtration abgetrennt und mit heissem Stickstoff getrocknet. Es werden 101,5 kg Polymerisat erhalten. Das entspricht einer Kontaktausbeute von 26,6 kg Polymeres/g Katalysatorfeststoff oder 8,1 kg Polymeres/mmol Ti.

Das Ethylen-Propylen-Copolymerisat besitzt einen Schmelzindex MFI 190/5 von 0,65 g/10 min, eine Verhältnis MFI 190/15/MFI 190/5 von 7,8, eine Dichte von 0,944 g/cm³ und eine Schüttdichte von 0,40 g/cm³.

Auf einer Hohlkörper-Blasanlage (Extruderschnecke: D = 60 m) werden aus dem Pulver Flaschen hergestellt. Bei einer Schneckendrehzahl von 40 tr/min wird ein sehr hoher Ausstoss von 57 kg/h erhalten. Die Flaschen zeigen eine glatte Oberfläche und zeigen im Spannungsrisstest nach Bell eine hohe Spannungsrissbeständigkeit von grösser 450 h.

*Vergleichsbeispiel A*

*a) Herstellung der Komponente A*

114,5 g Magnesiumethylat werden in einem 3-l-Vierhalskolben mit Tropftrichter, KPG-Rührer,

Rückflusskühler und Thermometer in 1,5 l Dieselölfraktion unter $N_2$-Überlagerung dispergiert. Zu dieser Dispersion werden unter Durchleiten eines schwachen $N_2$-Stromes innerhalb von 2 h bei 90°C 332 g Titantetrachlorid getropft. Anschliessend wird das Reaktionsprodukt mit der Dieselölfraktion gewaschen, bis die überstehende Lösung kein Titan mehr enthält. Nach dem Trocknen besitzt der Feststoff (Komponente A) folgende analytische Zusammensetzung:

Ti 4,9 Gew.-%
Mg 19,8 Gew.-%
Cl 61,3 Gew.-%

*b) Voraktivierung der Komponente A*

97,8 g der Komponente A werden mit Dieselöl auf 150 ml aufgefüllt und bei 20°C unter Rühren mit 100 ml einer Aluminiumtriisobutyllösung, die 0,5 mol $Al(iC_4H_9)_3$ pro 1 l enthält, versetzt. Dadurch werden 46 Gew.-% des vierwertigen Titans zu Titan(III) reduziert.

*c) Ethylenpolymerisation in Suspension*

In einem 150-l-Kessel werden 100 l Hexan, 100 mmol Aluminiumtriethyl und 12,5 ml der unter b beschriebenen Dispersion gegeben. Danach werden bei 85°C 5 kg Ethylen/h und soviel $H_2$ eingeleitet, dass sich im Gasraum ein Wasserstoffgehalt von 30 Vol.-% einstellt. Nach 6 h wird die Polymerisation bei einem Druck von 5,2 bar durch Entspannen abgebrochen. Es werden 28,6 kg Polyethylen erhalten. Das entspricht einer Kontaktausbeute von 5,8 kg/g Katalysatorfeststoff oder 5,7 kg PE/mmol Ti.

Das Produkt hat einen MFI 190/5 von 1,5 g/10 min, einen MFI 190/15/MFI 190/5 von 5,0, eine Dichte von 0,956 g/cm³ und eine Schüttdichte von 0,42 g/cm³. Das Produkt besitzt eine enge Molekulargewichtsverteilung: Mw/Mn = 4,5.

Bei der Verarbeitung des Pulvers auf einer Hohlkörper-Blasanlage (Extruderschnecke D = 60 mm) erhält man bei einer Schneckendrehzahl von 40 tr/min einen Ausstoss von 39 kg/h. Die Flaschen zeigen eine rauhe Oberfläche, da beim Verarbeiten *melt fracture* auftritt. Die Spannungsrissbeständigkeit der Flaschen im Test nach Bell beträgt 53 h.

*d) Ethylenpolymerisation in Suspension*

In einem 150-l-Kessel werden 100 l Dieselöl, 100 mmol Aluminiumisoprenyl und 5 ml der unter b beschriebenen Dispersion gegeben. Anschliessend werden bei einer Polymerisationstemperatur von 85°C 5 kg Ethylen/h und soviel $H_2$ eingeleitet, dass der $H_2$-Gehalt im Gasraum 50 Vol.-% beträgt. Nach 6 h wird die Polymerisation bei einem Druck von 25,2 bar durch Entspannen beendet. Die Suspension wird filtriert und das Polyethylenpulver durch Überleiten von heissem Stickstoff getrocknet.

Man erhält 26,3 kg Polyethylen. Dies entspricht einer Kontaktaktivität von 13,4 kg PE/g Katalysatorfeststoff oder 13,2 kg PE/mmol Ti. Das Polymerpulver besitzt einen MFI 190/5 von 21 g/10 min. Die Molekulargewichtsverteilungsbreite Mw/Mn ist 5,0, der MFI 190/5/MFI 190/5 beträgt 5,6. Die Dichte ist 0,962 g/cm³, die Schüttdichte des Pulvers ist 0,39 g/cm³.

*Beispiel 6*

*a) Herstellung der Komponente A*

114,3 g Magnesiumethylat werden in einem 3-l-Vierhalskolben mit Tropftrichter, KPG-Rührer, Rückflusskühler und Thermometer in 1 l der Dieselölfraktion unter $N_2$-Überlagerung dispergiert. Zu dieser Dispersion werden unter Durchleiten eines schwachen $N_2$-Stromes innerhalb von 2 h bei 100°C 474 g Titantetrachlorid getropft. Danach wird bei 100°C mit Dieselöl gewaschen, bis die überstehende Lösung kein Titan mehr enthält. Nun wird bei 140°C innerhalb 1 h 38 g Titantetrachlorid zugetropft und unter Überleiten eines schwachen $N_2$-Stromes weitere 60 h gerührt. Anschliessend wird das Umsetzungsprodukt mit der oben erwähnten Dieselölfraktion gewaschen, bis die überstehende Lösung kein Titan mehr enthält.

Nach dem Trocknen besitzt der Feststoff (Komponente A) folgende analytische Zusammensetzung:

Ti 5,1 Gew.-%
Mg 20,8 Gew.-%
Cl 71,7 Gew.-%

*b) Voraktivierung der Komponente A*

39,9 g der Komponente A werden in 150 ml Dieselöl suspendiert und bei 20°C unter Rühren mit 100 ml einer Aluminiumisoprenyllösung, die 0,5 mol Aluminiumisoprenyl/1 l enthält, versetzt. Dadurch wird 35 Gew.-% des vierwertigen Titans zu Titan(III) reduziert.

*c) Ethylenpolymerisation in Suspension*

In einem 150-l-Kessel werden 100 l Dieselöl, 25 mmol Aluminiumtriisobutyl und 1 ml der unter b beschriebenen Dispersion gegeben. Anschliessend werden bei einer Polymerisationstemperatur von 85°C 5 kg Ethylen/l und soviel $H_2$ eingeleitet, dass der $H_2$-Gehalt im Gasraum 45 Vol.-% beträgt. Nach 6 h wird die Polymerisation bei einem Druck von 25,5 bar durch Entspannen beendet. Die Suspension wird filtriert und das Polyethylenpulver durch Überleiten von heissem Stickstoff getrocknet.

Es werden 28,9 kg Polyethylen erhalten. Dies entspricht einer Kontaktaktivität von 76,9 kg PE/g Katalysatorfeststoff oder 72,3 kg PE/mmol Ti. Das Polyethylenpulver besitzt einen MFI 190/5 von 0,79 g/10 min. Die Molekulargewichtsverteilungsbreite Mw/Mn ist 18, der MFI 190/15/MFI 190/5 beträgt 7,8. Die Dichte ist 0,957 g/cm³ und die Schüttdichte des Pulvers ist 0,40 g/cm³.

*Beispiel 7*

*a) Herstellung der Komponente A*

142,3 g Magnesiumisopropylat werden in einem 3-l-Vierhalskolben mit Tropftrichter, KPG-Rührer, Rückflusskühler und Thermometer in 0,8 l Dieselölfraktion unter $N_2$-Überlagerung disper-

giert. Zu dieser Dispersion werden innerhalb von 4 h bei 75°C 949 g Titantetrachlorid getropft. Danach wird bei 75°C mit Dieselöl gewaschen, bis die überstehende Lösung kein Titan mehr enthält. Nun wird bei 120°C innerhalb ½ h 19 g Titantetrachlorid zugetropft und unter Überleiten eines schwachen $N_2$-Stromes weitere 60 h gerührt. Anschliessend wird das Umsetzungsprodukt mit der Dieselölfraktion gewaschen, bis die überstehende Lösung kein Titan mehr enthält.

Nach dem Trocknen besitzt der Feststoff (Komponente A) folgende analytische Zusammensetzung:

Ti 4,6 Gew.-%
Mg 22,1 Gew.-%
Cl 68,5 Gew.-%

*b) Ethylenpolymerisation in Suspension*

In einem 150-l-Kessel werden 100 l Dieselöl, 50 mmol Aluminiumtriisobutyl und 521 mg des unter a beschriebenen Katalysatorfeststoffes gegeben. Anschliessend werden bei einer Polymerisationstemperatur von 85°C 5 kg Ethylen/h und soviel $H_2$ eingeleitet, dass der $H_2$-Gehalt im Gasraum 50 Vol.-% beträgt. Nach 6 h wird die Polymerisation bei einem Druck von 25,2 bar durch Entspannen beendet. Die Suspension wird filtriert und das Polyethylenpulver durch Überleiten von heissem Stickstoff getrocknet.

Es werden 28,2 kg Polyethylen erhalten. Dies entspricht einer Kontaktaktivität von 54,1 kg PE/g Katalysatorfeststoff (Komponente A) oder 56,4 kg PE/mmol Ti. Das Polyethylenpulver besitzt einen MFI 190/5 von 3,2 g/10 min. Die Molekulargewichtsverteilungsbreite Mw/Mn ist 16, der MFI 190/15/MFI 190/5 beträgt 7,5. Die Dichte ist 0,957 g/cm³ und die Schüttdichte des Pulvers ist 0,39 g/cm³.

*Beispiel 8*

*Gasphasenpolymerisation von Ethylen*

In einem liegenden 20-l-Reaktor mit wandgängigem Rührer werden 500 g Polyethylenpulver (MFI 190/5 = 3,5 g/10 min, Schüttdichte = 0,40 g/cm³) vorgelegt. Der Reaktor wird durch mehrmaliges Evakuieren und mehrstündiges Spülen mit Ethylen von Luft befreit und dann auf 80°C erwärmt. In den Reaktor werden 50 mmol Aluminiumtriethyl und 52 mg der gemäss Beispiel 7a hergestellten Katalysatorkomponente gegeben.

Es werden 500 g Ethylen/h und soviel Wasserstoff eingeleitet, dass der Wasserstoffanteil im Gasraum während der Polymerisation immer 30 Vol.-% beträgt. Der Druck steigt während der Reaktionszeit auf 19,8 bar an. Nach 10 h wird die Polymerisation abgebrochen. Es werden 5,3 kg Polyethylen mit einem MFI 190/5-Wert von 3,6 g/10 min erhalten. Das entspricht einer Kontaktausbeute von 92 kg PE/g Katalysatorfeststoff oder 96 kg PE/mmol Ti.

## Patentansprüche

1. Verfahren zur Polymerisation eines 1-Olefins der Formel $R^4CH = CH_2$, in der $R^4$ Wasserstoff oder einen Alkylrest mit 1 bis 10 Kohlenstoffatomen bedeutet, in Gegenwart eines Katalysators, der aus dem Umsetzungsprodukt eines Magnesiumalkoholats mit Titantetrachlorid (Komponente A) und einer metallorganischen Verbindung der Gruppen I bis III des Periodensystems (Komponente B) besteht, dadurch gekennzeichnet, dass man in Gegenwart eines Katalysators polymerisiert, dessen Komponente A in der Weise hergestellt wurde, dass in einer ersten Reaktionsstufe ein Magnesiumalkoholat mit Titantetrachlorid in einem Kohlenwasserstoff bei einer Temperatur von 50 bis 100°C umgesetzt wurde, anschliessend die löslichen Bestandteile durch Waschen mit einem Kohlenwasserstoff abgetrennt wurden, der erhaltene Feststoff in einem Kohlenwasserstoff suspendiert und in einer zweiten Reaktionsstufe bei einer Temperatur von 110 bis 200°C unter Zusatz von $TiCl_4$ 8 bis 100 h einer thermischen Behandlung unterworfen wurde, und danach der Feststoff durch mehrmaliges Waschen mit einem Kohlenwasserstoff von löslichen Reaktionsprodukten befreit wurde.

2. Verfahren nach Anspruch 1, dadurch gekennzeichnet, dass zur Herstellung der Komponente A in der ersten Reaktionsstufe ein Magnesiumalkoholat der Formel $Mg(OR)_2$, in der R gleiche oder verschiedene Alkylreste mit 1 bis 6 Kohlenstoffatomen bedeutet, mit Titantetrachlorid in einem Kohlenwasserstoff bei einer Temperatur von 50 bis 100°C umgesetzt wurde, anschliessend die löslichen Bestandteile durch Waschen mit einem Kohlenwasserstoff abgetrennt wurden, der erhaltene Feststoff in einem Kohlenwasserstoff suspendiert, in einer zweiten Reaktionsstufe bei einer Temperatur von 110-200°C unter Zusatz von $TiCl_4$ 8 bis 100 h einer thermischen Behandlung unterworfen wurde, und danach der Feststoff durch mehrmaliges Waschen mit einem Kohlenwasserstoff von löslichen Reaktionsprodukten befreit wurde.

3. Verfahren nach Anspruch 1, dadurch gekennzeichnet, dass zur Herstellung der Komponente A in der ersten Reaktionsstufe ein komplexes Magnesiumalkoholat, das neben Magnesium mindestens ein Metall der 1. bis 4. Hauptgruppe des Periodensystems enthält, mit Titantetrachorid in einem Kohlenwasserstoff bei einer Temperatur von 50 bis 100°C umgesetzt wurde, anschliessend die löslichen Bestandteile durch Waschen mit einem Kohlenwasserstoff abgetrennt wurden, der erhaltene Feststoff in einem Kohlenwasserstoff suspendiert in einer zweiten Reaktionsstufe bei einer Temperatur von 110 bis 200°C unter Zusatz von $TiCl_4$ 8 bis 100 h einer thermischen Behandlung unterworfen wurde, und danach der Feststoff durch mehrmaliges Waschen mit einem Kohlenwasserstoff von löslichen Reaktionsprodukten befreit wurde.

4. Verfahren zur Herstellung eines Polymerisationskatalysators, der aus dem Umsetzungsprodukt eines Magnesiumalkoholats mit Titantetrachlorid (Komponente A) und einer metallorganischen Verbindung der Gruppen I bis III des Periodensystems (Komponente B) besteht, dadurch gekennzeichnet, dass man zur Herstellung der Komponente A in einer ersten Reaktionsstufe ein Magnesiumalkoholat mit Titantetrachlorid in einem inerten Kohlenwasserstoff bei einer Temperatur von 50 bis 100° C umsetzt, anschliessend die löslichen Bestandteile durch Waschen mit einem Kohlenwasserstoff abtrennt, den erhaltenen Feststoff in einem Kohlenwasserstoff suspendiert und in einer zweiten Reaktionsstufe bei einer Temperatur von 110 bis 200° C unter Zusatz von $TiCl_4$ 8 bis 100 h einer thermischen Behandlung unterwirft, und danach den Feststoff durch mehrmaliges Waschen mit einem Kohlenwasserstoff von löslichen Reaktionsprodukten befreit.

5. Verwendung des nach Anspruch 4 hergestellten Polymerisationskatalysators zur Polymerisation von 1-Olefinen der Formel $R^4CH = CH_2$, in der $R^4$ Wasserstoff oder einen Alkylrest mit 1 bis 10 Kohlenstoffatomen bedeutet.

## Claims

1. A process for the polymerization of a 1-olefin of the formula $R^4CH = CH_2$ in which $R^4$ denotes hydrogen or an alkyl radical having 1 to 10 carbon atoms, in the presence of a catalyst composed of the product from the reaction of a magnesium alcoholate with titanium tetrachloride (component A) and an organometallic compound of Groups I to III of the periodic system (component B), which comprises carrying out polymerization in the presence of a catalyst in which the component A has been prepared by a procedure in which, in a first reaction stage, a magnesium alcoholate is reacted with titanium tetrachloride in a hydrocarbon at a temperature of 50 to 100° C, the soluble constituents are then removed by washing with a hydrocarbon, the resulting solid is suspended in a hydrocarbon and is subjected, in a second reaction stage, to a heat treatment at a temperature of 110 to 200° C, with the addition of $TiCl_4$, for 8 to 100 h, and the solid is then freed from soluble reaction products by washing several times with a hydrocarbon.

2. The process as claimed in Claim 1, wherein the component A is prepared by reacting, in the first reaction stage, a magnesium alcoholate of the formula $Mg(OR)_2$ in which R denotes identical or different alkyl radicals having 1 to 6 carbon atoms, with titanium tetrachloride in a hydrocarbon at a temperature of 50 to 100° C, then removing the soluble constituents by washing with a hydrocarbon, suspending the resulting solid in a hydrocarbon and subjecting the solid, in a second reaction stage, to a heat treatment at a temperature of 110 to 200° C, with the addition of $TiCl_4$, for 8 to 100 h, and then freeing the solid from soluble reaction products by washing it several times with a hydrocarbon.

3. The process as claimed in Claim 1, wherein the component A is prepared by reacting, in the first reaction stage, a complex magnesium alcoholate which, as well as magnesium, contains at least one metal of the 1st to 4th main group of the periodic system, with titanium tetrachloride in a hydrocarbon at a temperature of 50 to 100° C, then removing the soluble constituents by washing with a hydrocarbon, suspending the resulting solid in a hydrocarbon, subjecting the solid, in a second reaction stage, to a heat treatment at a temperature of 110 to 200° C, with the addition of $TiCl_4$, for 8 to 100 h, and then freeing the solid from soluble reaction products by washing it several times with a hydrocarbon.

4. A process for the preparation of a polymerization catalyst composed for the product from the reaction of a magnesium alcoholate with titanium tetrachloride (component A) and an organometallic compound of Groups I to III of the periodic system (component B), wherein the component A is prepared by reacting, in a first reaction stage, a magnesium alcoholate with titanium tetrachloride in an inert hydrocarbon at a temperature of 50 to 100° C, then removing the soluble constituents by washing with a hydrocarbon, suspending the resulting solid in a hydrocarbon, and subjecting the solid, in a second reaction stage, to a heat treatment at a temperature of 100 to 200° C, with the addition of $TiCl_4$, for 8 to 100 h, and then freeing the solid from soluble reaction products by washing it several times with a hydrocarbon.

5. Use of the polymerization catalyst prepared as claimed in Claim 4 for the polymerization of 1-olefins of the formula $R_4CH = CH_2$ in which $R^4$ denotes hydrogen or an alkyl radical having 1 to 10 carbon atoms.

## Revendications

1. Procédé de polymérisation d'une 1-oléfine répondant à la formule $R^4CH = CH_2$ dans laquelle $R^4$ représente l'hydrogène ou un radical alkyle contenant de 1 à 10 atomes de carbone, en présence d'un catalyseur constitué d'un produit résultant de la réaction d'un alcoolate de magnésium avec le tétrachlorure de titane (composante A) et d'un composé organométallique d'un élément appartenant à l'un des groupes I à III de la classification périodique (composante B), procédé caractérisé en ce qu'on polymérise en présence d'un catalyseur dont la composante A a été préparée de la façon suivante: dans une première étape réactionnelle, on a fait réagir un alcoolate de magnésium avec le tétrachlorure de titane dans un hydrocarbure à une température de 50 à 100°C, puis on a séparé les constituants solubles par lavage avec un hydrocarbure, on a mis le corps solide obtenu en suspension dans un hydrocarbure et, dans une seconde étape réactionnelle, on l'a soumis à un traitement par la chaleur d'une durée de 8 à 100 h, en ajoutant du tétrachlorure de titane, à une température de 110 à 200° C, après quoi on a éliminé du corps solide les produits réactionnels solubles en le lavant plusieurs fois avec un hydrocarbure.

2. Procédé selon la revendication 1, caractérisé en ce que, dans la première étape réactionnelle de

la préparation de la composante A, on a fait réagir un alcoolate de magnésium répondant à la formule $Mg(OR)_2$ dans laquelle les R représentent des radicaux alkyles contenant de 1 à 6 atomes de carbone, identiques ou différents, avec le tétrachlorure de titane, dans un hydrocarbure, à une température de 50 à 100°C, puis on a séparé les constituants solubles par lavage avec un hydrocarbure, on a mis le corps solide obtenu en suspension dans un hydrocarbure et, dans la seconde étape réactionnelle, on l'a soumis à un traitement par la chaleur d'une durée de 8 à 100 h, en ajoutant du tétrachlorure de titane, à une température de 110 à 200°C, après quoi on a éliminé du corps solide, en le lavant plusieurs fois avec un hydrocarbure, les produits réactionnels solubles.

3. Procédé selon la revendication 1, caractérisé en ce que, dans la première étape réactionnelle de la préparation de la composante A, on a fait réagir un alcoolate de magnésium complexe, contenant, en plus du magnésium, au moins un métal d'un des groupes I à IV de la classification périodique, avec le tétrachlorure de titane, dans un hydrocarbure, à une température de 50 à 100°C, puis on a séparé les constituants solubles par lavage avec un hydrocarbure, on a mis le corps solide obtenu en suspension dans un hydrocarbure et, dans la seconde étape réactionnelle, on l'a soumis à un traitement par la chaleur d'une durée de 8 à 100 h, en ajoutant du tétrachlorure de titane, à une température de 110 à 200°C, après quoi on a éliminé du corps solide, en le lavant plusieurs fois avec un hydrocarbure, les produits réactionnels solubles.

4. Procédé de préparation d'un catalyseur de polymérisation constitué d'un produit résultant de la réaction d'un alcoolate de magnésium avec le tétrachlorure de titane (composante A) et d'un composé organométallique d'un élément appartenant à l'un des groupes I à III de la classification périodique (composante B), procédé caractérisé en ce que, pour préparer la composante A, dans une première étape réactionnelle, on fait réagir un alcoolate de magnésium avec le tétrachlorure de titane, dans un hydrocarbure inerte, à une température de 50 à 100°C, puis on sépare les constituants solubles par lavage avec un hydrocarbure, on met le corps solide obtenu en suspension dans un hydrocarbure et, dans une seconde étape réactionnelle, on le soumet à un traitement par la chaleur à une température de 110 à 200°C, pendant 8 à 100 h, en ajoutant du tétrachlorure de titane, après quoi on élimine du corps solide, par plusieurs lavages avec un hydrocarbure, les produits réactionnels solubles.

5. Application du catalyseur de polymérisation préparé selon la revendication 4 à la polymérisation de 1-oléfines répondant à la formule $R^4CH = CH_2$ dans laquelle $R^4$ représente l'hydrogène ou un radical alkyle contenant de 1 à 10 atomes de carbone.